Europäisches Patentamt

European Patent Office

Office européen des brevets

(11) Veröffentlichungsnummer: **0 382 852**

**A1**

## (12) EUROPÄISCHE PATENTANMELDUNG
### veröffentlicht nach Art. 158 Abs. 3 EPÜ

(21) Anmeldenummer: **89906484.4**

(22) Anmeldetag: **11.04.89**

(86) Internationale Anmeldenummer:
**PCT/SU89/00092**

(87) Internationale Veröffentlichungsnummer:
**WO 89/10687 (16.11.89 89/27)**

(51) Int. Cl.5: **A01J 7/00**

(30) Priorität: **05.05.88 SU 4413033**

(43) Veröffentlichungstag der Anmeldung:
**22.08.90 Patentblatt 90/34**

(84) Benannte Vertragsstaaten:
**DE FR GB IT NL SE**

(71) Anmelder: **LATVIISKAYA SELSKOKHOZYAISTVENNAYA AKADEMIA**
**ul. Lenina, 2 Elgava**
**Latviiskaya SSR, 229600(SU)**

(72) Erfinder: **MOSKVIN, Gennady Alexeevich**
**ul. Satixmes, 49-59 Elgava**
**Latviiskaya SSR, 229601(SU)**

(74) Vertreter: **Patentanwälte Zellentin & Partner**
**Zweibrückenstrasse 15**
**D-8000 München 2(DE)**

(54) **ANORDNUNG ZUR BESTIMMUNG DES PRODUKTIVITÄTSINDEX UND DER FUTTERMENGE BEI TIEREN.**

(57) Die Einrichtung enthält einen mit einem Melkapparat (3) verbundenen Sammelbehälter (1) für die gemolkene Milch. Innerhalb des Behälters (1) ist ein Milchstandgeber untergebracht, der in Form eines Schwimmkörpers (15) mit einem Magneten (16) ausgeführt ist, durch den ein zylindrisches Gehäuse (17) hindurchgeht. Im Gehäuse (17) sind übereinander Zungenrelais $(18, 25_1, 25_2, ..., 25_n)$ eines Erkennungsgeräts für den Milchstand bzw. einer Programmiereinheit angeordnet, die mit dem Magneten (16) des Schwimmkörpers (15) in Wechsel wirkung stehen und an die zugeordneten Eingänge einer am Behälter (1) befestigten Recheneinheit (21) geschaltet sind. Die Zungenrelais $(18, 25_1, 25_2, ..., 25_n)$ sind in einem Abstand angeordnet, der einem Wert der optimalen Viehfutterration gleich ist, der dem Index der individuellen tierischen Leistung entspricht.

FIG.1

EP 0 382 852 A1

EINRICHTUNG ZUR BESTIMMUNG DES INDEXES DER INDIVIDUEL-
LEN TIERISCHEN LEISTUNG UND DER VIEHFUTTERRATION

## Gebiet der Technik

Die Erfindung bezieht sich auf die Melktechnik und betrifft insbesondere eine Einrichtung zur Bestimmung des Indexes der individuellen tierischen Leistung und der Viehfutterration.

Um eine planmäßige und wirksame zootechnische Veterinär- und Selektionsarbeit mit der Milchviehherde durchzuführen, muß man eine Primärinformation zur Zusammenstellung individueller Viehfutterrationen gemäß dem Leistungsstand zur Verfügung haben. Hierbei ist die Bestimmung der von jeder Kuh gemolkenen individuellen Milchmenge eine arbeitsintensive Zwischenoperation zur Bestimmung eines Parameters, der die Zugehörigkeit des Leistungsstandes jedes Tieres zu einem vereinbarten Bereich bzw. Index bewertet, auf dessen Basis im weiteren optimale individuelle Viehfutterrationen, im wesentlichen für konzentrierte Futtermittel, errechnet werden.

Die Notwendigkeit einer operativen Zusammenstellung einer optimalen Ration von konzentrierten Futtermitteln nach dem Stand der tierischen Leistung ist durch deren Einfluß auf eine Steigerung von gemolkenen Milchmengen (eine vollständigere Ausnutzung des genetischen Potentials der Leistung jedes Tieres) und deren Einfluß auf die Selbstkosten der Milcherzeugung auf Farmen bedingt, die in der Regel maximal 75 % der Kosten der Milchgewinnung auf den Farmen betragen. Um die Fütterung der Tiere zu regeln, sind außerdem Datensätze über tägliche Milchleistungen und Futterrationen für eine Laktationsperiode zu speichern. Deshalb ist es bei der Organisierung der zootechnischen Veterinär- und Selektionsarbeit mit der Herde auf den Farmen wichtig, die Erhaltung und Verarbeitung von Informationen über jedes Tier zu automatisieren, um die Arbeitsintensität von mit der Bestimmung des Indexes der tierischen Leistung und der individuellen Viehfutterration zusammenhängenden Operationen zu senken. Die Art der bereitzustellenden Informationen muß für eine operative Ausnutzung durch das das Vieh pflegende Personal der Farm maximal geeignet sein.

- 2 -

Stand der Technik

Es ist ein Aggregat für ein individuelles Melken (Reklameschrift des Resekne-Werks für Melkanlagen "Aggregat AID-1 für individuelles Melken", 1984) bekannt, das einen mit einem Melkapparat verbundenen zylindrischen Sammelbehälter für die gemolkene Milch aufweist.

Die bekannte Einrichtung ist nicht in der Lage, den Index der individuellen tierischen Leistung und der Viehfutterration zu bestimmen und erfordert daher einen Mehraufwand für diese arbeitsintensiven Operationen.

Es ist ein Melkapparat mit einer Digitalaufzeichnung der Milchleistung("Dojarka z cyfrowa rejestracja przebiegu dojenia", Maszyny i ciagniki rolnicze, Polska, 1987, V. 6, Teil 33, Nr. 1, S. 21 bis 23) bekannt, der einen mit dem Melkapparat verbundenen zylindrischen Sammelbehälter für die gemolkene Milch und einen in dessen Hohlraum liegenden Schwimmkörper enthält, der durch ein Seil mit einem Gegengewicht über eine Antriebsrolle verbunden ist, die mit der Achse eines mit einer elektronischen Einheit gekoppelten Drehimpulswandlers in Verbindung steht.

Nach der Betätigung der Melkanlage gelangt die Milch aus dem Melkapparat in den zylindrischen Behälter und hebt den Schwimmkörper auf, der mit Hilfe des Seiles die Antriebsrolle und damit den Drehimpulswandler in Rotation versetzt. Der letztere sendet entsprechende Impulse in ein elektronisches Registriergerät, und auf solche Weise wird der individuelle Milchertrag jeder Kuh in Abhängigkeit von den Bedingungen der Füllung des zylindrischen Behälters mit der Milch beim Melken jedes Tieres fixiert.

Diese Einrichtung legt nur den herkömmlichen Parameter - den Milchertrag - als Primärparameter der Erfassung der individuellen Eigenschaft jedes Tieres fest, sieht aber keine Möglichkeit zur Bestimmung von für die Zooveterinär- und Selektionsarbeit notwendigen Endparametern - dem Index der individuellen tierischen Leistung und der Viehfutterration - vor, was die Möglichkeit ihrer Benutzung begrenzt und einen Arbeits-Mehraufwand erforderlich macht.

Außerdem ist die Einrichtung in konstruktiver Hinsicht kompliziert, und darin kommt ein unvollkommenes Kontaktprinzip der Registrierung wegen der Einwirkung einer Reibungskraft, beispielsweise in den Auflagern der Rollen und bei einer Berührung derselben durch das Seil des Schwimmkörpers, zur Geltung. Dies führt zu Meßfehlern bei der Bestimmung des Milchertrages und bei der Digitalaufzeichnung der letzteren durch das elektronische Gerät. Das Fehlen einer Recheneinheit mit einer Steuertafel beschränkt die Funktionsfähigkeiten der Einrichtung bei ihrer Vorabstimmung und bei der Überwachung ihrer Anzeigen. Das Fehlen der Recheneinheit gestattet es auch nicht, die Anzeigen der Einrichtung unter Beachtung der Eigenschaften des zu messenden Mediums und der Konstruktionsbesonderheiten der Einrichtung zu korrigieren, und erschwert auch ein Tarieren des zylindrischen Behälters. Im Ergebnis wird die zootechnische Veterinär- und Selektionsarbeit kompliziert, die hohe Anforderungen an die Genauigkeit und Sicherheit der Primärinformation stellt, die in ein gewöhnliches oder automatisiertes Leitungssystem der Milchfarm eingegeben wird.

Es ist ein Registriergerät für die gemolkene Milchmenge (SU,A, 1109092) bekannt, das einen mit einem Melkapparat und mittels eines Milchsaugstutzens mit einer Milchleitung verbundenen zylindrischen Sammelbehälter für die gemolkene Milchmenge enthält. Innerhalb des zylindrischen Behälters ist ein Standgeber für die Milch im Behälter untergebracht, der in Form eines Schwimmkörpers mit einem Magneten ausgeführt ist. Das Erkennungsgerät für den Milchstand im Behälter ist in Form einer Gruppe von Zungenrelais ausgeführt, die nach der Höhe des zylindrischen Behälters mit der Möglichkeit einer Wechselwirkung mit dem Magneten des Schwimmkörpers angeordnet sind. Die Ausgänge der Zungenrelais sind an die Eingänge einer Recheneinheit gelegt, die am zylindrischen Behälter befestigt ist.

Bei der Füllung des Behälters mit Milch taucht der Schwimmkörper im Vorgang der maschinellen Melkung der Kuh auf der Milchoberfläche auf. Das Magnetfeld des Ringmagneten wirkt beim Aufstieg des Schwimmkörpers auf die einzelnen Zungenrelais aufeinanderfolgend ein, die außerhalb des zylindrischen Behälters schraubenlinienförmig angeordnet sind.

Beim Ansprechen des Zungenrelais gelangt das Steuersignal in die Recheneinheit, die den in Digitalform dargestellten Milchertrag jeder Kuh einspeichert, wobei die Programmierung der Recheneinheit durch die Bedienungskraft von der Steuertafel manuell vorgenommen wird.

Die bekannte Einrichtung ist auch zur Bestimmung des Indexes der individuellen tierischen Leistung und der Viehfutternorm nicht geeignet, denn sie ermittelt die Primärinformation - den Milchertrag- und keinen ihm entsprechenden Index der individuellen Leistung. Deshalb wird eine Weiterverarbeitung der Primärinformation - des Milchertrages - zu dem ihm zugeordneten Index der Leistung verlangt.

Darüber hinaus sieht die bekannte Einrichtung keine Möglichkeit vor, eine Viehfutterration zu bestimmen.

Die Verwirklichung der manuellen Programmierung der Recheneinheit (infolge des Fehlens der automatischen Programmiermittel) kompliziert den Betrieb der Einrichtung und läßt die Eingabe von eventuell fehlerhaften Programmen durch die Bedienungskraft zu. Dies bringt in den Meßvorgang subjektive Fehler ein und setzt die Sicherheit der erhaltenen Ergebnisse herab. Die gleichzeitige Arbeit des Personals mit mehreren Melkapparaten verringert dessen Arbeitsleistung beim Fehlen der automatischen Programmiermittel für die Recheneinheit durch Ablenkung des Personals für die Hilfsoperationen.

Das Fehlen eines Stabilisierungsgliedes für den Milchstand kann beim Melken von unruhigen Tieren ein Fehlansprechen der Zungenrelais und eine Verzerrung der anfallenden Informationen zur Folge haben, was das Bedienungspersonal der Farm bei der Bestimmung der wahren Indexe der individuellen tierischen Leistung und der richtigen Viehfutterration irreführen kann.

Offenbarung der Erfindung

Der Erfindung liegt die Aufgabe zugrunde, in einer Melkanlage eine ⟩ Einrichtung zur Bestimmung des Indexes der individuellen tierischen Leistung und der Viehfutterration dahingehend zu verbessern, daß es möglich ist, den Betrieb der Einrichtung zu vereinfachen, deren Funktionsfähigkeiten zu erweitern und eine wirksame und operative zootechnische Veterinär- und Selektionsarbeit mit jedem Tier auf der Milchfarm in einer für das Personal der Farm allgemein zugänglichen Form zu gewährleisten.

Die gestellte Aufgabe wird dadurch gelöst, daß in die Einrichtung zur Bestimmung des Indexes der indivuellen tierischen Leistung und der Viehfutterration, die einen mit einem Melkapparat und mittels eines Milchsaugstutzens mit einer Milchleitung verbundenen Sammelbehälter für die gemolkene Milch, einen in Form eines innerhalb des Sammelbehälters für die gemolkene Milch untergebrachten Schwimmkörpers mit einem Magneten ausgeführten Milchstandgeber, eine am Sammelbehälter für die gemolkene Milch befestigte Recheneinheit und ein Erkennungsgerät für den Milchstand im Sammelbehälter für die gemolkene Milch, das in Form einer Gruppe von Zungenrelais ausgeführt ist, die über die Höhe des Sammelbehälters für die gemolkene Milch mit der Möglichkeit einer Wechselwirkung mit dem Magneten des Schwimmkörpers übereinander angeordnet und an die jeweiligen Eingänge der Recheneinheit geschaltet sind, enthält, gemäß der Erfindung eine Programmiereinheit eingeführt ist, die in Form einer Gruppe von Zungenrelais ausgeführt. ist, die unter den Zungenrelais des Erkennungsgeräts für den Milchstand im Sammelbehälter für die gemolkene Milch in einem innerhalb des Sammelbehälters für die gemolkene Milch untergebrachten gemeinsamen Gehäuse in einem Abstand voneinander vertikal angeordnet sind, der einem Wert der optimalen Viehfutterration gleich ist, der dem Index der individuellen tierischen Leistung entspricht, wobei die Zungenrelais der Programmiereinheit an die zugeordneten Eingänge der Recheneinheit angeschlossen sind.

Um eventuellen Informationsverzerrungen vorzubeugen, die durch Fehlauslösungen der Zungenrelais beim Melken

- 6 -

von unruhigen Tieren hervorgerufen werden, ist es vorteilhaft, daß der Sammelbehälter für die gemolkene Milch mit einem Stabilisierungsglied für den Milchstand in diesem Behälter versehen ist, das in Form eines am Behälterboden befestigten elastischen Saugfußes ausgeführt ist.

Es ist auch vorteilhaft, daß der Boden des Sammelbehälters für die gemolkene Milch mit einer Vertiefung in dessen Zentralteil ausgeführt ist, in der die Programmiereinheit angeordnet ist, wobei die geometrischen Abmessungen der Vertiefung die des Schwimmkörpers überschreiten müssen. Dies gestattet es, das zur Durchführung der Operation einer automatischen Programmierung beim Melken des Tieres erforderliche Milchvolumen auf ein Mindestmaß zu reduzieren.

Die vorliegende Erfindung wird nachstehend an einem konkreten Ausführungsbeispiel anhand von Zeichnungen näher erläutert. Es zeigt:

Fig. 1 eine Gesamtansicht einer erfindungsgemäßen Einrichtung zur Bestimmung des Indexes der individuellen tierischen Leistung und der Viehfutterration in der Arbeitsstellung im Längsschnitt;

Fig. 2 ein Blockschaltbild des Anschlusses einer Programmiereinheit und eines Erkennungsgeräts für den Milchstand in einem Sammelbehälter für die gemolkene Milch an eine Recheneinheit gemäß der Erfindung;

Fig. 3 ein Struktur-Funktionsschaltbild der Recheneinheit mit einem Schaltbild der Verkettung von Zungenrelais der Programmiereinheit mit dem Erkennungsgerät für den Milchstand im Sammelbehälter für die gemolkene Milch gemäß der Erfindung.

Die erfindungsgemäße Einrichtung zur Bestimmung des Indexes der individuellen tierischen Leistung und der Viehfutterration enthält einen mit einem Melkapparat 3 verbundenen zylindrischen Sammelbehälter 1 für die gemolkene Milch mit einem Deckel 2. Auf dem Deckel 2 ist ein Pulsator 4 angeordnet. Der Melkapparat 3 und der Behälter 1 sind an eine Vakuumleitung 5 einer (nicht dargestellten) Melkanlage mittels eines Schlauches 6 angeschlossen.

- 7 -

Der Behälter 1 kommuniziert mit einer Milchleitung 7 über einen Milchsaugstutzen 8, der mit einem hohlen Mundstück 9 versehen ist, das in den Behälter 1 bis zur Berührung des Bodens 10 mit seinem Ende getaucht ist, das einen Schnitt unter einem Winkel von 45° zur besseren Milchförderung, ohne daß es zur Bildung von Pulsationsstopfen kommt, aufweist. An dem vertikal angeordneten steifen Stutzen 8 ist an einer Schnittstelle ein Probennehmer 11 für Milchportionen zwecks ihrer weiteren Laboranalyse angebracht, der ein hohles L-Milchentnahmerohr 12 umfaßt, das senkrecht zum Stutzen 8 mit der Möglichkeit einer Rotation um seine Achse angeordnet ist und am Ende einen Schnitt unter einem Winkel von 45° aufweist, der der Stromrichtung der Milch bei deren Absaugen aus dem Behälter 1 zugekehrt ist. Zur Luftableitung aus dem Probennehmer 11 dient bei seiner Füllung mit der Milch ein hohles S-förmiges Luftentnahmerohr 13, das an der Schnittstelle des Stutzens 8 angeordnet und mit seinem Ende nach der Seite gerichtet ist, die der Strömrichtung der Milch bei deren Absaugen aus dem Behälter 1 entgegengesetzt ist. Um die Milch aus dem Behälter 1 abzusaugen und sie der Milch-Förderleitung 7 zulaufen zu lassen, dient ein Hahn 14, der beim Melken gesperrt ist. Der Behälter 1 ist mit einem Milchstandgeber versehen, der in Form eines Schwimmkörpers 15 mit einem Magneten 16 ausgeführt ist. Innerhalb des Behälters 1 ist ein zylindrisches Gehäuse 17 vertikal angeordnet, das aus unmagnetischem Werkstoff, beispielsweise aus Aluminium, hergestellt ist und durch den Schwimmkörper 15 mit dem Magneten 16 hindurchgeht. Im Gehäuse 17 ist eine Gruppe von Zungenrelais 18 eines Erkennungsgeräts 18 für den Milchstand untergebracht, die über die Höhe des Gehäuses 17 übereinander in einem Abstand angeordnet sind, der einem Wert der optimalen Tierfutterration gleich ist, der dem Index der individuellen tierischen Leistung zugeordnet ist. Die Zungenrelais 18 des Erkennungsgeräts für den Milchstand sind mittels einer Schiene 19 und einer Steckverbindung 20 an die zugeordneten Eingänge einer Recheneinheit 21 mit einem Registriergerät für die Norm der Futterration oder den Index der individuellen Leistung, das einen Digitalanzeiger 22 darstellt, sowie an eine Anzeigeeinheit 23 für die Melkzeit gelegt. Die Recheneinheit 21 wird am Behälter 1 mit Hilfe einer Konsole 24 befestigt.

Zur automatischen Programmeingabe in die Recheneinheit 21 ist die Einrichtung mit einer Programmiereinheit versehen, die in Form einer Gruppe von Zungenrelais $25_1, 25_2$, ..., $25_n$ ausgeführt ist, worin n die Zahl der Programmieroperationen der Recheneinheit 21 ist. Die Zungenrelais $25_1, 25_2$ ..., $25_n$ der Programmiereinheit sind in einem gemeinsamen Gehäuse 17 unter den Zungenrelais 18 des Erkennungsgeräts für den Milchstand in einer Vertiefung 26 untergebracht, die im Zentralteil des Bodens 10 des Behälters 1 ausgeführt ist, wobei die geometrischen Abmessungen der Vertiefung 26 die des Schwimmungskörpers 15 mit dem Magneten 16 überschreiten. Die Zungenrelais $25_1, 25_2$ ..., $25_n$ sind mittels einer Schiene 19 und einer Steckverbindung 20 an die zugeordneten Eingänge der Recheneinheit 21 gelegt.

Für eine zuverlässige Sicherung der Anzeigen des Milchstandes im Behälter 1 dient beim Melken der unruhigen Tiere ein Stabilisierungsglied für den Milchstand, das in Form eines am Boden 10 des Behälters 1 befestigten elastischen Saugfußes 27 ausgeführt ist.

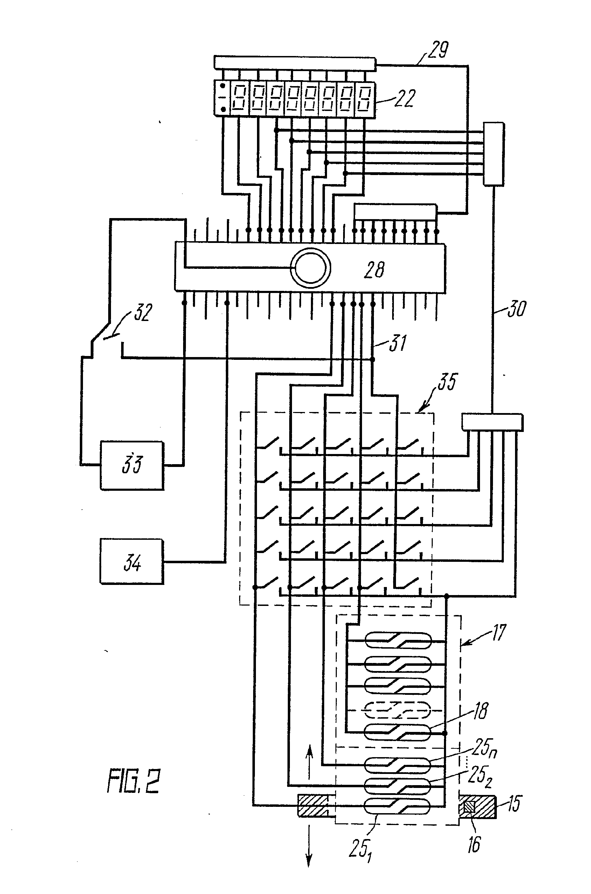

Die Recheneinheit 21 enthält einen Mikroprozessor 28 (Fig. 2) mit Datenbussen/ 29,30,31 und einem Umschalter 32 sowie eine Einheit 33 von Registern, einen Taktfrequenzgenerator 34 und eine Steuertafel 35.

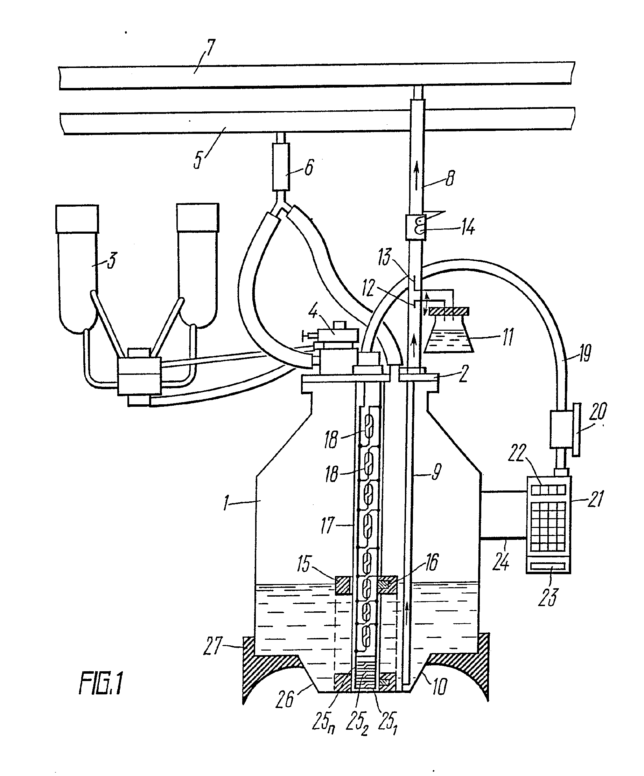

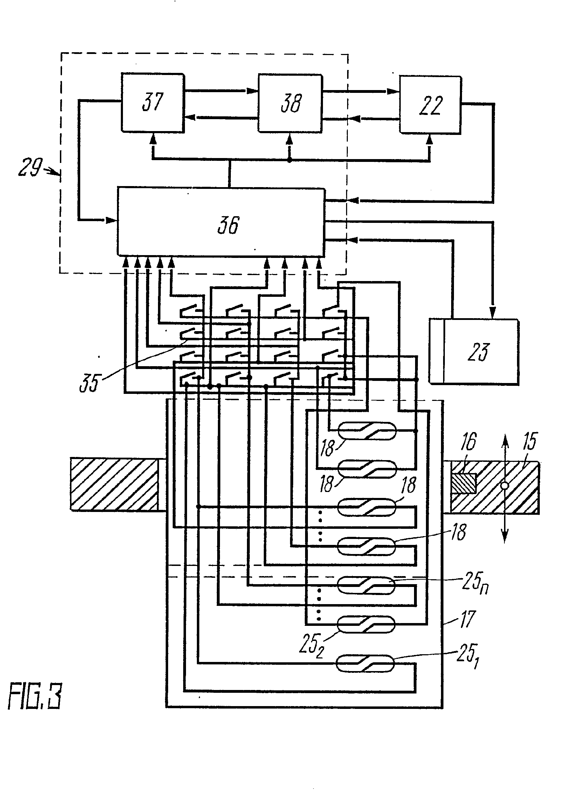

Der Mikroprozessor 28 (Fig. 3) enthält eine Steuereinheit 36, eine Speichereinheit 37, eine Recheneinheit 38, die zusammengeschaltet sind. Die Steuertafel 35 der Recheneinheit 21 (Fig. 1) besteht aus einem Matrixfeld mit den Ziffern - von 0 bis 9 - und mit speziellen Abbreviaturen (Symbolen)/ sowie aus Matrizen für die/Eingabe von Programmen, arithmetischen Operationen, Löschung von Anzeigen des Digitalanzeigers 22 (Fig. 3) und der Anzeigeeinheit 23 für die Melkzeit, Ein- und Ausschaltung einer Stoppuhr der Einheit 23, Ein- und Ausschaltung einer akustischen Signalisierung und von Betriebsartenumschaltern der Recheneinheit 21 (Fig. 1).

Die erfindungsgemäße Einrichtung zur Bestimmung des Indexes der individuellen tierischen Leistung und der Viehfutterration arbeitet wie folgt.

Der zylindrische Sammelbehälter 1 für die gemolkene
Milch wird im Melkbereich auf den Fußboden mit Hilfe des
Saugfußes 27 aufgestellt, und der Melkapparat 3 wird an die
Zitzen des Euters eines Tieres angeschlossen. Mit Hilfe des
Stutzens 8 wird der Behälter 1 an die Milchleitung 7 und
mit Hilfe des Schlauches 6 an die Vakuumleitung 5 der Melkanlage angeschlossen, wobei der Hahn 14 gesperrt ist.

An der Steuertafel 35 (Fig. 2) der Recheneinheit 21
(Fig. 1) wird die Einschaltzeit für die akustische Signalisierung über den Anfang des Endstadiums des Melkens und über
die Notwendigkeit eines Überganges zum Nachmelken der Tiere
eingestellt. Dies ist zur gleichzeitigen Bedienung mehrerer
Melkapparate 3 beim Melken mehrerer Tiere auf einmal erforderlich und trägt zu rationellen Übergängen des Maschinenmelkers von einem Tier zum anderen bei. Außerdem ist das zur
Verhinderung eines "trockenen" Melkens der Tiere und einer
damit verbundenen Erkrankung des Euters der Tiere notwendig.
Nach der Eingabe des Arbeitsprogramms der Anzeigeeinheit
23 für die Melkzeit und der Einspeisung der Spannung in die
Recheneinheit 21 ist die Einrichtung bereit zur Arbeit im
automatischen Betrieb.

Beim Melken des Tieres strömt die Milch in den Behälter 1 ein und hebt, indem sie sich ansammelt, den Schwimmkörper
16 mit dem Magneten 16 an. Das durch den Magneten 16 des
Schwimmkörpers 15 erzeugte Magnetfeld wirkt auf die Zungen-
relais $25_1, 25_2, \ldots, 25_n$ der Programmiereinheit ein, indem es
ihre Kontakte schließen läßt, wobei sich die Kontakte der
jeweiligen Zellen des Matrixfeldes der Steuertafel 35 (Fig.2)
der Recheneinheit 21 (Fig. 1) schließen. Der Zyklus der automatischen Programmierung der Recheneinheit 21 beginnt in
dem Maße des Anstiegs des Schwimmkörpers 15 samt dem Mag-
neten 16 längs des Gehäuses 17 mit der Operation der Rückstellung des Registers des Anzeigers 22 auf Null (Operation
Löschung der Anzeigen), die bei Einwirken des Magnetfeldes
des Magneten 16 auf das Zungenrelais $25_1$ der Programmierein-
heit ausgeführt wird.

Indem der Schwimmkörper 15 mit dem Magneten 16 beim Zulauf der nachfolgenden Milchportionen im Behälter 1 aufsteigt, erreicht er den Pegel des Zungenrelais $25_2$, das mit den Kontakten der Steuertafel 35 (Fig. 2) der Recheneinheit 21 (Fig. 1) zusammenwirkt, die der Eintragung der Ziffer 1 in das Register des Anzeigers 22 entsprechen, die im weiteren die Nummer des Indexes der tierischen Leistung oder der Norm der Futterration des einzelnen Tieres bezeichnet, die im Vorgang des laufenden Melkens bestimmt werden.

Die für die Durchführung der Operationen der automatischen Programmierung benötigte Milchmenge beträgt meist 150 bis 200 ml. Diese Menge reicht aus, um den Anfang des Melkverfahrens eindeutig zu identifizieren, was vom physiologischen Standpunkt eine Adäquatheit des Vorganges der Realisierung der reflektorisch bedingten Milchzugabe mit dem Vorgang der mechanischen Milchzugabe durch den Melkapparat 3 in der Anfangsphase des maschinellen Melkens der Kühe bedeutet. Die Identifikation des Anfanges der Realisierung des Vorganges der aktiven Milchzugabe gestattet es, die Zeit einer falschen mechanischen Milchzugabe zu eliminieren, die nicht immer sofort in die reflektorisch bedingte Milchzugabe (beispielsweise infolge einer nichtoptimalen Betriebsart der Melkung, des Gesundheitszustandes, schmerzhafter rezeptorischer Empfindungen der Zitzen des Euters u.ä.) übergeht. Infolgedessen sind wiederholte falsche Milchzugaben möglich, während die Zwischenzeit zwischen ihnen in die Gesamtzeit des maschinellen Melkens nicht eingehen soll, weil bei einer Selektion der Tiere die Zeit einer "reinen" Melkung benötigt wird, die die Intensität der Milchabgabe und die Geeignetheit jedes einzelnen Tieres für das maschinelle Melken festlegt. Deshalb können in die Programmiereinheit auch zusätzliche Zungenrelais $25_3$,..., $25_n$ u.a. zur Ein- und Ausschaltung der Anzeigeeinheit 23 für die Melkzeit bei jedem Tier eingehen. Hierbei ist das jeweilige Zungenrelais $25_1$, $25_2$,..., $25_n$ für die Steuerung der Ein- und Ausschaltung der Anzeigeeinheit 23 für die Melkzeit mit dem zugeordneten Kontakt der Matrix der Tafel 35 (Fig. 2) verkettet.

Der Zyklus der automatischen Programmierung der Recheneinheit 21 (Fig. 1) wird mit der Eingabe eines Programms für die arithmetische Operation Addition abgeschlossen, das dem Pegel der Anordnung des Zungenrelais $25_n$ entspricht, das mit dem zugeordneten Kontakt der Matrix Addition der Tafel 35 (Fig. 2,3) der Recheneinheit 21 (Fig. 1) verkettet ist. Der Magnet 16 des Schwimmkörpers 15 wirkt mit seinem Feld auf das Zungenrelais $25_n$ ein, und indem er das letztere schließen läßt, schließt er den zugeordneten Kontakt der Matrix "Addition". Der Mikroprozessor 28 (Fig. 2) erkennt automatisch den Zustand dieser Matrix und gibt diese arithmetische Operation in die Recheneinheit 38 (Fig. 3) ein.

Im folgenden erreicht die Milch den Pegel des Erkennungsgeräts für den Milchstand mit den Zungenrelais 18 (Fig. 1), die mit dem Kontakt für die Ausführung der im Ablaufdiagramm der automatischen Programmierung der Programmiereinheit genannten arithmetischen Operationen verkettet sind, und die Arbeit des Erkennungsgeräts für den Milchstand geschieht in Analogie zur Arbeit der Programmiereinheit. Da das Erkennungsgerät für den Milchstand aus einer Gruppe von parallelgeschalteten Zungenrelais 18 besteht, die über die Höhe des Gehäuses 17 auf verschiedenen Niveaus angeordnet sind, die Gruppen der Identifizierung des Indexes der individuellen tierischen Leistung und der Norm der Viehfutterration entsprechen, so werden in dem Maße des Anstiegs des Milchstandes und der Verschiebung des Magneten 16 mit dem Schwimmkörper 15 längs der Wand des Gehäuses 17 die Kontakte der Gruppe der Zungenrelais 18 aufeinanderfolgend und also auch der zugeordnete Kontakt (Berechnen des Ergebnisses) geschlossen, was in Analogie zu den vorhergehenden Operationen durch den Mikroprozessor 28 (Fig. 2) erkannt wird, wonach auf dem Anzeiger 22 (nach der Zahl der vorgegebenen Gruppen der Leistung) Digitalwerte der Indexe der individuellen tierischen Leistung und der Norm der Viehfutterration erscheinen. Der Abstand zwischen den Zungenrelais 18 entspricht den Intervallen der Gruppen der Leistung beispielsweise gemäß der Tabelle.

- 12 -

Normen der Zuführung von konzentrierten Futtermitteln pro 1 kg Milch

| Milch-ertrag, kg | Index der Leistung | Dosis der Futterration, g | Index der Futterration |
|---|---|---|---|
| bis 10 | 1 | 90 - 100 | 1 |
| 10 - 15 | 2 | 100 - 150 | 2 |
| 15 - 20 | 3 | 150 - 200 | 3 |
| 20 - 25 | 4 | 200 - 300 | 4 |
| 25 - 30 | 5 | 300 - 350 | 5 |

Zur praktischen Arbeit reichen normalerweise fünf Gruppen der tierischen Leistung aus, weshalb im Erkennungsgerät für den Milchstand bereits fünf Zungenrelais 18 ausreichend sein können. Dies vereinfacht die Einrichtung und deren Betrieb.

Mit dem Signal von der Anzeigeeinheit 23 für die Melkzeit, die auf die Signalisierung des Anfanges des Endstadiums der Melkung einprogrammiert ist, wird das Tier bei Anwesenheit des Maschinenmelkmeisters nachgemolken, die Melkbecher des Melkapparates 3 werden abgenommen, es werden Indexe der Leistung und der Futterration sowie die gesamte Melkzeit nach der Anzeigeeinheit 23 registriert.

Um aus dem zylindrischen Behälter 1 die Milch von einer Kuh wird der Hahn 14 geöffnet und der Hohlraum des zylindrischen Behälters 1 mit der evakuierten Milchleitung 7 verbunden. Hierbei wird die Milch über das hohle Mundstück 9 und den Stutzen 8 in die Milchleitung 7 mit anschließender Milchförderung über die Milchleitung 7 zur Vorbehandlung entsprechend der auf der Farm praktizierten Technologie abgesaugt. Beim Milchabsaugen über den Stutzen 8 werden Proben für eine Milchanalyse bei jeder Kuh über das Rohr 12 des Probennehmers 11 entnommen. Der in den Probennehmer 11 abgeführte Milchteil beträgt 1 bis 2 % der gesamten Milchmenge. Dieser Anteil wird durch Drehung des Rohres 12 um seine Achse geregelt, wodurch der 45°-Schnitt des Endes des Rohres 12 in Bezug auf den abgesaugten Milchstrom aus dem Behälter 1 eine größere oder kleinere Querschnittsfläche bekommt. Damit wird die Genauigkeit der Probenahme erzielt, denn die Entnahme erfolgt nicht im pulsierenden, sondern in einem kontinuierlichen Milchstrom.

In dem Maße der Leerung des Behälters sinkt der Milchpegel ab, der Schwimmkörper 15 mit dem Magneten 16 geht auf den Boden des Behälters 1 nieder, und das Magnetfeld des Magneten 16 schließt, indem es auf das Zungenrelais 25 einwirkt, dessen Kontakt, wodurch der mit diesem gekoppelte Kontakt "Löschung" der Matrix der Steuertafel 35 (Fig. 2,3) der Recheneinheit 21 (Fig. 1) geschlossen wird. Der Mikroprozessor 28 (Fig. 2) erkennt den Zustand dieser Matrix und stellt die Register des Anzeigers 22 und der Anzeigeeinheit 23 für die Melkzeit auf Null zurück, wodurch die Recheneinheit 21 (Fig. 1) zur Arbeit beim Melken eines weiteren Tieres vorbereitet wird, an welches in Analogie zu den vorangegangenen Operationen im folgenden der Melkapparat 3 angeschlossen wird, und der Vorgang der automatischen Bestimmung des Indexes der individuellen tierischen Leistung und der Norm der Viehfutterration wiederholt sich.

Zur Erleichterung der Arbeit des Bedienungspersonals und zur Kontrolle des Verbrauchs der konzentrierten Futtermittel ist in der Recheneinheit 21 die Möglichkeit einer automatischen Überführung des Indexes der Leistung in einen entsprechenden Milchertrag oder in den Wert der Futterration vorgesehen, die unmittelbar in vorgegebenen Meßeinheiten: Liter, Gramm, Kilogramm usw. in Abhängigkeit von den auf der Farm angenommenen Meßeinheiten ausgedrückt sind. Zu diesem Zweck kann die Recheneinheit 21 umprogrammiert werden, was die Funktionsfähigkeiten der Einrichtung im ganzen ohne Mehraufwand für diese Ziele wesentlich erweitert.

Infolgedessen gestattet die Einrichtung zur Bestimmung des Indexes der individuellen tierischen Leistung und der Viehfutterration das Niveau der zootechnischen Veterinär- und Selektionsarbeit mit jedem einzelnen Tier zu erhöhen, was zu einer optimalen und vollständigeren Ausnutzung des genetischen Potentials der Leistung beiträgt und die Milcherträge erhöht und außerdem Futtermittel durch deren rationale Verwertung einspart.

Die Einrichtung ist einfach im Betrieb und in der Konstruktion und automatisiert einen sehr arbeitsaufwendigen Vorgang der Erhaltung einer objektiven Information über den Zustand jedes Tieres, die außerdem zur Herstellung von wirksamen Rückkopplungen in einem automatisierten Leitungssystem der Milchfarm unter Anwendung der Computertechnik benötigt wird. Die genannte Einrichtung sieht die Möglichkeit eines Anschlusses derselben an das automatisierte Leitungssystem der Milchfarm mittels der Steckverbindung 20 vor, was es gestattet, diese sowohl in einem lokalen als auch in Rechnernetzen zur Verarbeitung von Informationen verschiedener Prioritätsebenen einzusetzen.

Die vorliegende Erfindung erlaubt es zum ersten Mal, einen Komplex von Operationen zur zootechnischen Veterinär- und Selektionsarbeit zu automatisieren, der so die Bestimmung von Primärparametern über den Melkertrag jedes Tieres wie auch von weiteren Parametern zur Ermittlung des Indexes der individuellen tierischen Leistung und der optimalen Viehfutterration entsprechend dem Index der Leistung umfaßt.

Die erfindungsgemäße Einrichtung verfügt über weite Funktionsfähigkeiten, denn sie sichert die Erhaltung sämtlicher erforderlicher Daten zur automatisierten Auswahl von hochleistenden Tieren, wie sie Milchertrag, Melkzeit und - intensität, sowie automatische Probeentnahme für eine Milchanalyse sind, und bestimmt den Index der individuellen tierischen Leistung und die optimale Futterration.

Die Sicherheit der Anzeigen in der erfindungsgemäßen Einrichtung wird durch deren Einfachheit, automatische Programmierung und Einführung eines Stabilisierungsgliedes für den Milchstand in einen zylindrischen Behälter gewährleistet. Die geringe Anzahl der Zungenrelais 18 und $25_1, 25_2 \ldots, 25_n$ im Erkennungsgerät für den Milchstand bzw. in der Programmiereinheit sowie die unkomplizierten Betriebsprogramme der Recheneinheit 21 sorgen für die Einfachheit und Zugänglichkeit der Einrichtung bei deren Bedienung durch das Personal, das über keine hohe Qualifikation und keine speziellen Kenntnisse auf dem Gebiet der Programmierung der Rechentechnik verfügt.

Die vorliegende Einrichtung nutzt wirkungsvoll adaptive Möglichkeiten in der Steuerung der Tiere, die auf eine vollständigere Verwertung ihres genetischen Potentials hinsichtlich der Leistung ausgerichtet ist. da durch die Einrichtung nicht Zwischenempfehlungen, sondern im Hinblick auf eine optimale Verteilung der Futterration ausgegeben werden, die keiner zusätzlichen Informationsverarbeitung bedürfen, wobei die Beratungsinformation in einer allgemein zugänglichen Form - in Form von Indexen bzw. Ziffern von 1 bis maximal 10 - dargestellt ist.

Die Einrichtung trägt zur Einsparung von Futtermitteln bei, denn sie berücksichtigt das wahre Leistungsniveau jedes Tieres entsprechend dem Stadium seiner Laktation, weshalb keine Überfütterung oder Unterernährung eintritt.

Das Vorhandensein eines Gliedes zur Überwachung des Endstadiums der Melkung gibt die Möglichkeit, das Vorliegen oder Fehlen wiederholter Zugaben bei der Auswahl von hochleistenden Kühen festzustellen, was für Kenntnis der Anpassung der maschinellen Milchgewinnungstechnik an das Tier wichtig ist.

Gewerbliche Anwendbarkeit

Die vorliegende Erfindung kann zur Schaffung einer neuen / aussichtsreichen Klasse von "intelligenten" Milchmengenmessern angewendet werden, die zur automatisierten zootechnischen Veterinär- und Selektionskontrolle von Tieren und zur Auswahl von hochleistenden Kühen für deren maschinelle Haltung und Melkung vorgesehen sind. Die Erfindung kann bei beliebigen Typen von Melkanlagen unter Benutzung von Melkapparaten mit Sammlung der gemolkenen Milch in Behältern sowie bei der Bestimmung einer individuellen Viehfutterration entsprechend dem individuellen Leistungsstand verwendet werden.

- 16 -

PATENTANSPRÜCHE

1. Einrichtung zur Bestimmung des Indexes der individuellen tierischen Leistung und der Viehfutterration, die einen mit einem Melkapparat (3) und mittels eines Milchsaugstutzens (8) mit einer Milchleitung (7) verbundenen Sammelbehälter (1) für die gemolkene Milch, einen in Form eines innerhalb des Sammelbehälters (1) für die gemolkene Milch untergebrachten Schwimmkörpers (15) mit einem Magneten (16) ausgeführten Milchstandgeber, eine am Sammelbehälter (1) für die gemolkene Milch befestigte Recheneinheit (21) und ein Erkennungsgerät für den Milchstand im Sammelbehälter (1) für die gemolkene Milch, das in Form einer Gruppe von Zungenrelais (18) ausgeführt ist, die über die Höhe des Sammelbehälters (1) für die gemolkene Milch mit der Möglichkeit einer Wechselwirkung mit dem Magneten (16) des Schwimmkörpers (15) übereinander angeordnet und an die jeweiligen Eingänge der Recheneinheit (21) geschaltet sind, enthält, dadurch g e k e n n z e i c h n e t , daß sie mit einer Programmiereinheit versehen ist, die in Form einer Gruppe von Zungenrelais ($25_1$, $25_2$, ..., $25_n$) ausgeführt ist, die unter den Zungenrelais (18) des Erkennungsgeräts für den Milchstand im Sammelbehälter (1) für die gemolkene Milch in einem innerhalb des Sammelbehälters (1) für die gemolkene Milch untergebrachten gemeinsamen Gehäuse (17) in einem Abstand voneinander vertikal angeordnet sind, der einem Wert der optimalen Viehfutterration gleich ist, der dem Index der individuellen tierischen Leistung entspricht, wobei die Zungenrelais ($25_1$, $25_2$, ..., $25_n$) der Programmiereinheit an die zugeordneten Eingänge der Recheneinheit (21) angeschlossen sind.

2. Einrichtung zur Bestimmung des Indexes der individuellen tierischen Leistung und der Viehfutterration nach Anspruch 1, dadurch g e k e n n z e i c h n e t , daß der Sammelbehälter (1) für die gemolkene Milch mit einem Stabilisierungsglied für den Milchstand in diesem Behälter (1) versehen ist, das in Form eines am Boden des Behälters (1) befestigten elastischen Saugfußes (23) ausgeführt ist.

3. Einrichtung zur Bestimmung des Indexes der individuellen tierischen Leistung und der Viehfutterration nach Anspruch 1 oder 2, dadurch g e k e n n z e i c h n e t, daß der Boden des Sammelbehälters (1) für die gemolkene Milch mit einer Vertiefung (26) in dessen Zentralteil ausgeführt ist, in der die Programmiereinheit angeordnet ist, wobei die geometrischen Abmessungen der Vertiefung (26) die des Schwimmkörpers (15) überschreiten.

FIG.1

FIG. 2

FIG.3

# INTERNATIONAL SEARCH REPORT

International Application No PCT/SU 89/00092

**I. CLASSIFICATION OF SUBJECT MATTER** (If several classification symbols apply, indicate all) [6]

According to International Patent Classification (IPC) or to both National Classification and IPC

IPC[4]   A 01 J 7/00

**II. FIELDS SEARCHED**

| Minimum Documentation Searched [7] | |
|---|---|
| Classification System | Classification Symbols |
| IPC[4] | A 01 J 7/00 |

Documentation Searched other than Minimum Documentation
to the Extent that such Documents are Included in the Fields Searched [8]

**III. DOCUMENTS CONSIDERED TO BE RELEVANT [9]**

| Category [*] | Citation of Document, [11] with indication, where appropriate, of the relevant passages [12] | Relevant to Claim No. [13] |
|---|---|---|
| A | SU, A1, 1159521 (Latviiskaya selskhozyyaistvennaya akademia) 7 June 1985 (07.06.85) see the claims, figures | 1-3 |
| A | SU, A1, 1250225 (Kubansky selskokhozyaistvenny institut) 15 August 1986 (15.08.86) see the claims, figures 1-3 | 1-3 |
| A | SU, A1, 1253535 (Kubansky selskoknozyaistvenny institut) 30 August 1986 (30.08.86) see the claims, figures 1-2 | 1-3 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 4 July 1989 (04.07.89) | 15 August 1989 (15.08.89) |
| International Searching Authority | Signature of Authorized Officer |
| ISA/SU | |

Form PCT/ISA/210 (second sheet) (January 1985)